# EUROPÄISCHE PATENTSCHRIFT

(11) **EP 2 118 480 B1**
(45) Veröffentlichungstag und Bekanntmachung des Hinweises auf die Patenterteilung: **03.11.2010**
(21) Anmeldenummer: 08701221.7
(22) Anmeldetag: 03.01.2008
(51) Int. Cl.: F02M 47/02, F02M 59/46, F16K 25/04

(54) **KUGELSITZVENTIL MIT VERRINGERTEM EROSIONSVERHALTEN**
BALL VALVE WITH REDUCED EROSION BEHAVIOR
SIÈGE DE SOUPAPE SPHÉRIQUE À COMPORTEMENT D'ÉROSION RÉDUIT

(30) Priorität: 30.01.2007 DE 102007004553
(43) Veröffentlichungstag der Anmeldung: 18.11.2009
(73) Patentinhaber: Robert Bosch GmbH, 70442 Stuttgart (DE)
(72) Erfinder: GIRLINGER, Gerhard, A-4060 Leonding (AT); TRAXEL, Frank, 74918 Angelbachtal (DE); MITTER, Roland, A-4040 Linz (AT)
(86) Internationale Anmeldenummer: PCT/EP2008/050039
(87) Internationale Veröffentlichungsnummer: WO 2008/092711

(56) Entgegenhaltungen:
- EP-A- 1 013 919
- WO-A-02/23036
- WO-A-2006/029927
- DE-A1- 10 152 173

## Beschreibung

### Stand der Technik

Die Erfindung geht aus von bekannten Kugelsitzventilen zur Einstellung eines Durchflusses fluider Medien. Derartige Kugelsitzventile werden in vielen Bereichen der Technik eingesetzt, in welchen ein Durchfluss fluider Medien, wie beispielsweise Gasen oder Flüssigkeiten, eingestellt werden muss, beispielsweise im Bereich hydraulischer Regelungen.

Ein wichtiges Anwendungsbeispiel derartiger Kugelsitzventile ist im Bereich der Kraftfahrzeugtechnik zu finden, insbesondere im Bereich der Einspritztechnik. So werden Kugelsitzventile in zahlreichen Einspritzeinrichtungen zur hydraulischen Druckregelung und/oder Steuerung des Einspritzverhaltens derartiger Systeme eingesetzt. Vor allem im Bereich der Hochdruckspeichereinspritzsysteme (Common-Rail-Systeme) werden Kugelsitzventile genutzt, um den Hub eines Einspritzventilgliedes, welches Einspritzöffnungen öffnet oder schließt, zu steuern. Beispiele derartiger Vorrichtungen sind in DE 101 52 173 A1 und DE 196 50 865 A1 genannt. Dabei steht ein Steuerraum, welcher direkt oder indirekt den Hub des Einspritzventilgliedes beeinflusst, unmittelbar oder über eine weitere Bohrung über einen Einlauf mit dem Kugelsitzventil in Verbindung. Das Kugelsitzventil weist neben einer Ventilkugel einen Aktor auf, welcher die Ventilkugel in einen Ventilsitz presst oder von diesem abhebt, um den Steuerraum von einem Entlastungsraum zu trennen oder mit diesem zu verbinden.

Wie beispielsweise auch in DE 101 52 173 A1 dargestellt, weisen aus dem Stand der Technik bekannte Kugelsitzventile zur Einstellung des Durchflusses in der Regel auf der dem Steuerraum zugewandten Seite des Einlaufs eine Vordrossel auf. An diese Vordrossel schließen sich zum Kugelsitzventil hin eine oder mehrere Erweiterungen des Einlaufs an, welche unterschiedliche Formen annehmen können.

Herkömmliche, aus dem Stand der Technik bekannte Kugelsitzventile weisen jedoch in der Praxis, insbesondere bei den mit Drücken von einigen 1000 bar arbeitenden Hochdruckspeichereinspritzsystemen, den Nachteil einer starken Erosion auf. Diese Erosion ist insbesondere auf eine Kavitation an der Vordrossel zurückzuführen, welche überwiegend außerhalb der Hubdrosselgrenze auftritt. Als Hubdrosselgrenze wird dabei die Grenze des Hubs des Kugelsitzventils bezeichnet, oberhalb derer sich der Durchfluss bei konstantem Druck vor und nach dem Kugelsitzventil nicht mehr ändert. Die beschriebenen Kavitationseffekte an der Vordrossel führen in weiterer Folge insbesondere im Sitzbereich des Kugelsitzventils durch Kondensation zur so genannten Kavitationserosion. Dadurch ändert sich das Schließverhalten der Kugelsitzventile, und mit diesem das Einspritzverhalten der Einspritzeinrichtung.

### Vorteile der Erfindung

Es wird dementsprechend ein Kugelsitzventil zur Einstellung eines Durchflusses eines fluiden Mediums vorgeschlagen, sowie eine Einspritzeinrichtung, welche ein derartiges Kugelsitzventil umfasst, welche die oben beschriebenen Nachteile des Standes der Technik vermeiden. Insbesondere weist das vorgeschlagene Kugelsitzventil eine Geometrie auf, bei welcher Kavitationserosionen stark vermindert sind und bei welcher dennoch gegebenenfalls auftretende Kavitationserosionen den Ventilsitz nicht derartig schädigen, dass dieser undicht wird.

Zur Optimierung der Kugelsitzventil-Geometrie wurden Simulationsrechnungen durchgeführt, welche verschiedene für die Kavitationserosion maßgebliche Parameter des fluiden Mediums am Kugelsitzventil darstellen. Diese Parameter sind insbesondere der im fluiden Medium auftretende Druck, die Geschwindigkeit des fluiden Mediums, der Dampfanteil am Gesamtvolumen des fluiden Mediums sowie eine Massenübergangsrate zwischen flüssiger und gasförmiger Phase des fluiden Mediums.

Bei diesen Simulationsrechnungen hat es sich gezeigt, dass Kavitationserosionen sich effizient verringern lassen, wenn ein (insbesondere hochdruckseitiger) Einlauf zum Sitz des Kugelsitzventils verwendet wird, welcher eine Vordrossel und einen sich an die Vordrossel zum Ventilsitz hin anschließenden Diffusor mit einer Ventilsitz-seitigen Verengung aufweist. Als "Diffusor" wird dabei allgemein der Bereich zwischen Vordrossel und Ventilsitz bezeichnet.

Diese spezielle Form des Diffusors mit der erfindungsgemäßen Verengung im Gegensatz zu einer (insbesondere stufenförmigen) Erweiterung, wie sie beispielsweise in DE 101 52 173 A1 dargestellt ist, hat einen besonderen räumlichen Verlauf der oben genannten Parameter im Bereich des Ventilsitzes zur Folge, durch welchen Kavitationserosion vermieden wird. Dabei wird durch die Verengung vor dem Ventilsitz die Strömung des fluiden Mediums derart gelenkt, dass die Gefahr der Kavitationserosion im Bereich des Ventilsitzes stark vermindert wird.

Die Phase zwischen dem Ventilsitz und der Diffusorbohrung wird allgemein als "Helgetfase" bezeichnet. Bei den bekannten Ventilsitzgeometrien tritt im Bereich dieser Helgetfase ein Totwassergebiet auf, also ein Gebiet der Strömungsablösung von der Bohrungswand. Eine derartige Strömungsablösung führt jedoch im Weiteren zu einer Wand gerichteten Strömung, das heißt insbesondere einer Geschwindigkeitskomponente der Strömung in Richtung hin zur Wand. Bei der erfindungsgemäßen Geometrie tritt hingegen keine oder eine stark verringerte Ablösung der Strömung des fluiden Mediums auf. Dadurch wird auch die wandgerichtete Strömung in der Helgetfase vermieden oder zumindest stark reduziert, das heißt Geschwindigkeitskomponenten senkrecht zur Bohrungswand werden stark vermindert oder ganz vermieden.

Weiterhin wird durch die neue Geometrie in der Helgetfase unterhalb des Ventilsitzes der Anteil der gasförmigen Phase des fluiden Mediums in Wandnähe stark vermindert. Somit steht in der Wandnähe im Bereich des Ventilsitzes kein oder nur ein unwesentlicher Dampfanteil zur Verfügung, welcher kondensieren könnte. Somit ist die Kondensationsrate in diesem Bereich verschwindend gering. Durch dieses gemeinsame Auftreten von wandparalleler Strömung, geringem Dampfanteil und kleiner Kondensationsrate in Wandnähe wird durch die erfindungsgemäße Geometrie Kavitationserosion wirksam vermieden.

Das erfindungsgemäße Kugelsitzventil und die erfindungsgemäße Einspritzeinrichtung weisen somit eine hohe Langzeitstabilität auf. Die Einspritzeinrichtungen zeigen über lange Einsatzzeiträume hinweg ein gleichmäßiges Einspritzverhalten und geringe Leckageraten.

### Kurze Beschreibung der Zeichnungen

Ausführungsbeispiele der Erfindung sind in den Zeichnungen dargestellt und in der nachfolgenden Beschreibung näher erläutert.

Es zeigen
- Figuren 1A und 1B: Einlaufgeometrien herkömmlicher Kugelsitzventile;
- Figur 2: ein erfindungsgemäßes Ausführungsbeispiels eines Kugelsitzventils mit zylindri- schem Diffusor;
- Figur 3: ein zu Figur 2 alternatives Ausführungsbeispiel mit einem Kegeldiffusor; und
- Figur 4: ein zu Figur 1B analoge Detaildarstellung der Verengung im Bereich des Ventil- sitzes.

### Ausführungsformen der Erfindung

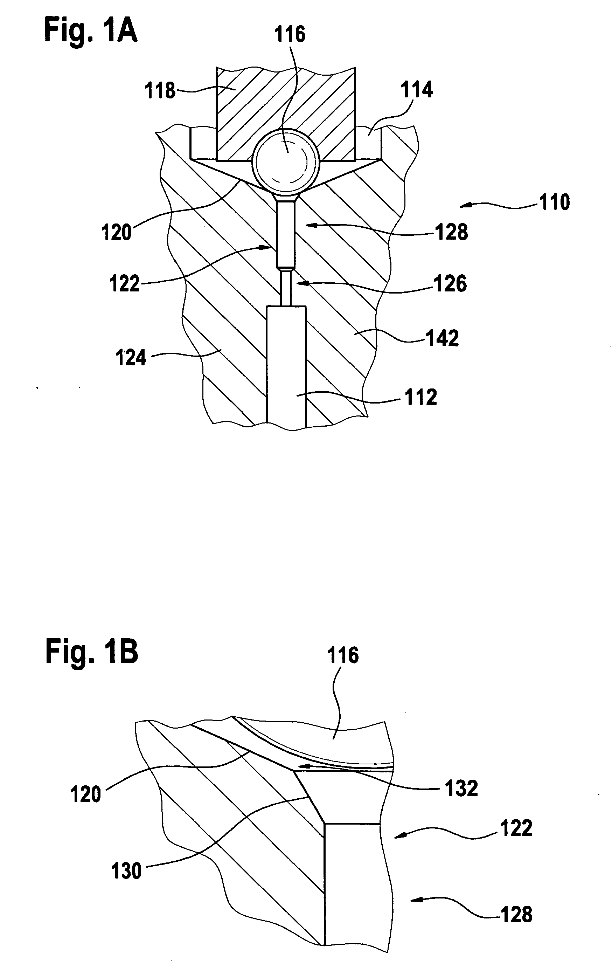

In Figur 1A ist ein dem Stand der Technik entsprechendes Kugelsitzventil 110 dargestellt, welches beispielsweise der in DE 101 52 173 A1 dargestellten Anordnung entspricht. Bei diesem Beispiel eines Kugelsitzventils 110 handelt es sich, wie auch im Folgenden, um ein 2/2-Wege-Ventil. Auch andere Ausgestaltungen sind jedoch denkbar.

Das Kugelsitzventil 110 wird beispielsweise in einer Einspritzeinrichtung eingesetzt und dient dazu, eine mit einem Steuerraum in Verbindung stehende Bohrung 112 mit einem Entlastungsraum 114 zu verbinden oder von diesem zu trennen. Zu diesem Zweck wird ein Schließelement 116, wobei es sich in diesem Fall um eine Ventilkugel handelt, mittels eines Aktors 118 in einen kegelförmigen Ventilsitz 120 gepresst bzw. von diesem abgehoben. Anstelle eines kugelförmigen Schließelements 116 können auch andere Schließelementformen eingesetzt werden, vorzugsweise abgerundete Formen, welche dem Fachmann bekannt sind.

Die Bohrung 112, in welcher beispielsweise ein Kraftstoffdruck im Bereich von 2000 bar herrschen kann, steht mit dem Entlastungsraum 114 über einen Einlauf 122 in Verbindung, welcher Bestandteil des Kugelsitzventils 110 ist und welcher als Bohrung in einem Ventilkörper 124 ausgestaltet ist.

Der Einlauf 122 weist zunächst auf der der Bohrung 112 zuweisenden Seite eine zylinderförmige Vordrossel 126 auf, an welche sich zum Ventilsitz 120 hin ein zylindrischer Diffusor 128 anschließt. Am Übergang zwischen Vordrossel 126 und Diffusor 128 ist dabei in der Regel eine leichte Abschrägung vorgesehen. Durch den Querschnitt der Vordrossel 126 wird der Durchfluss oberhalb der Hubdrosselgrenze durch das Kugelsitzventil 110 maßgeblich beeinflusst und eingestellt.

Bei dem Aktor 118 kann es sich beispielsweise, wie in DE 196 50 865 A1 gezeigt, um einen Magnetaktor handeln, bei welchem über einen Elektromagneten gezielt die Lage des Schließelements 116 eingestellt wird. Auch andere Arten von Aktoren sind jedoch einsetzbar.

In Figur 1B ist der Übergang des Einlaufs 122 zum Ventilsitz 120 in vergrößerter Detaildarstellung in geöffneter Ventilstellung gezeigt. Dabei ist zu erkennen, dass an diesem Übergang der Einlauf 122, wie er beispielsweise ebenfalls DE 101 52 173 A1 vorgeschlagen, eine kegelförmige Aufweitung aufweist.

Wie oben beschrieben, wurden verschiedene Simulationsrechnungen durchgeführt, um die genannten kritischen Parameter im Bereich dieses Übergangs simulatorisch zu ermitteln. Dabei ergab sich, dass in dem für das Dichtverhalten des Kugelsitzventils 110 besonders kritischen Dichtbereich 132, in welchem im geschlossenen Zustand das Schließelement 116 auf dem Dichtsitz 120 aufliegt, bei der in den Figuren 1A und 1B dargestellten, dem Stand der Technik entsprechenden Ausführung Geschwindigkeiten im Bereich von ca. 200 bis 400 m/s auftraten bei für Einspritzeinrichtungen realistischen Druckunterschieden zwischen Entlastungsraum 114 und Bohrung 112. Diese Geschwindigkeiten wiesen Winkel relativ zur Wand des Ventilkörpers 124 auf, welche im Bereich von bis zu 30 bis 45° lagen.

Weiterhin ergab sich in diesem besonders kritischen Bereich ein Dampfanteil (wobei die Simulationen überwiegend für Dieselkraftstoff durchgeführt wurden) am Gesamtvolumen von bis zu 0,7 bis 0,8. Weiterhin war die Massenübergangsrate von der dampfförmigen in die flüssige Phase in diesem Dichtbereich 132 vergleichsweise hoch und lag bei bis zu ca. 30000 kg/(s · m³) (abhängig vom Betriebspunkt). Wie oben beschrieben, führen diese hohen Geschwindigkeitskomponenten senkrecht zur Wand des Ventilkörpers 124, die hohen, kondensationsfähigen Dampfanteile und die hohe Massenübergangsrate zur Kavitationserosion im Dichtbereich.

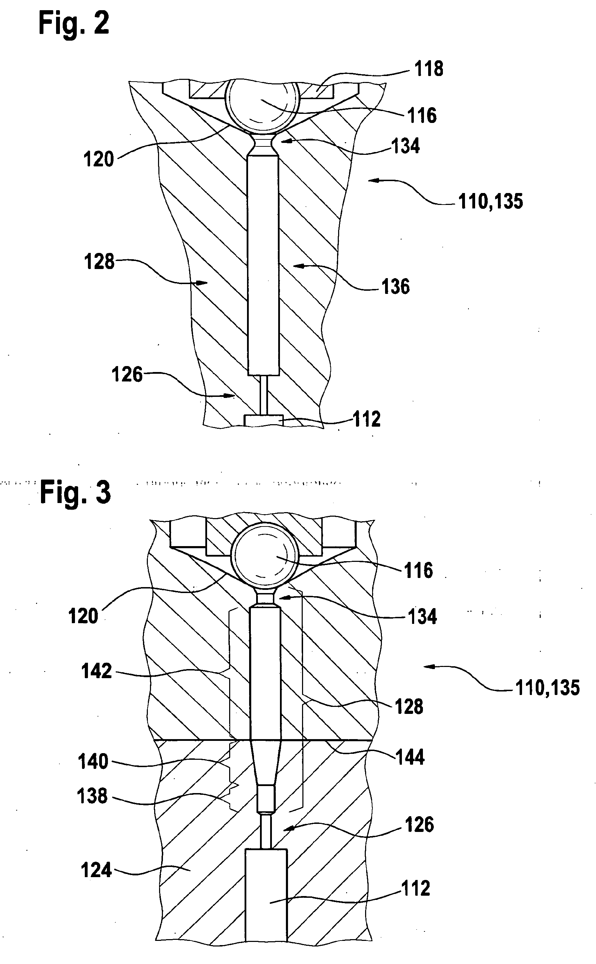

In den Figuren 2 und 3 sind demgegenüber erfindungsgemäße Ausführungsformen von Kugelsitzventilen 110 dargestellt, welche beispielsweise in einer erfindungsgemäßen Kraftstoff-Einspritzeinrichtung 135 eingesetzt werden können, beispielsweise in einem Common-Rail-Injektor. Diese Kugelsitzventile 110 weisen ebenfalls wieder einen Einlauf 122 auf, welcher an seiner mit der Bohrung 112 in Verbindung stehenden Seite eine Vordrossel 126 aufweist.

Wie auch in dem Ausführungsbeispiel gemäß Figur 1A schließt sich zum Ventilsitz 120 hin an die Vordrossel 126 der Diffusor 128 an. In den Figuren 2 und 3 sind dabei unterschiedliche Ausgestaltungen dieses Diffusors 128 dargestellt, wobei dieser jedoch in jedem Fall an seiner dem Ventilsitz 120 zuweisenden Seite eine Verengung 134 aufweist.

Bei dem in Figur 2 dargestellten Ausführungsbeispiel ist der Diffusor 128 zwischen Vordrossel 126 und Verengung 134 als im Wesentlichen durchgehender, zylindrischer Diffusorabschnitt 136 ausgebildet. Bei dem in Figur 3 dargestellten Ausführungsbeispiel hingegen ist der Diffusor 128 zwischen Vordrossel 126 und Verengung 134 im Wesentlichen in drei Teilabschnitte unterteilt: Einen sich an die Vordrossel 126 anschließenden ersten zylindrischen Diffusorabschnitt 138, einen sich in Richtung auf den Ventilsitz 120 aufweitenden kegelförmigen Diffusorabschnitt 140 und einen sich nach oben hin bis zur Verengung 134 erstreckenden zweiten zylindrischen Diffusorabschnitt 142.

Bei der in Figur 3 dargestellten Ausgestaltung des Diffusors 128 mit dem kegelförmigen Diffusorabschnitt 140 ist weiterhin zwischen dem kegelförmigen Diffusorabschnitt 140 und dem zweiten zylindrischen Diffusorabschnitt 142 im Ventilkörper 124 eine optionale Trennebene 144 vorgesehen. Diese Trennebene 144 trennt zwei Baugruppen der Einspritzeinrichtung 135, welche beispielsweise durch eine außenliegende, in Figur 3 nicht dargestellte Überwurfmutter miteinander verbunden sein können. Diese Trennebene 144 erleichtert die Fertigung des Diffusors 128 erheblich, da in diesem Fall beispielsweise der erste zylindrische Diffusorabschnitt 138 und der kegelförmige Diffusorabschnitt 140 gemeinsam durch eine Bohrung von oben erstellt werden können.

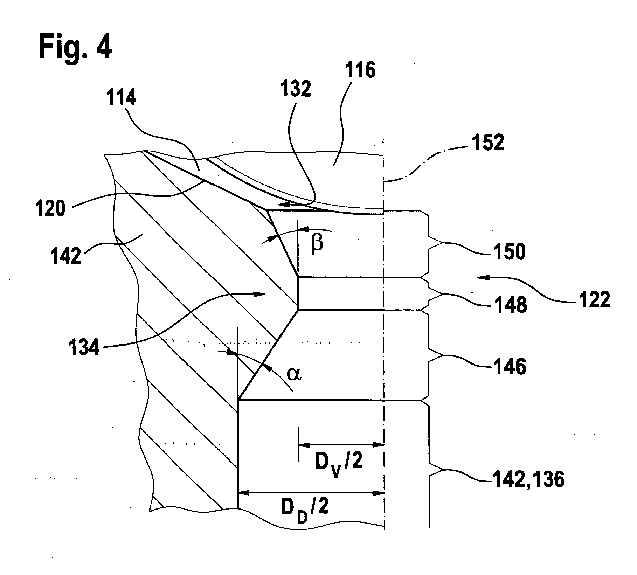

In Figur 4 ist, analog zu Figur 1B, eine Detaildarstellung des Übergangs zwischen dem Einlauf 122 und dem Entlastungsraum 114 für das in den Figuren 2 oder 3 dargestellte Ausführungsbeispiel des Kugelsitzventils 110 mit der Verengung 134 dargestellt. Wie aus Figur 4 zu erkennen, ist die Verengung 134 dabei dreiteilig ausgebildet: An den zylindrischen Diffusorabschnitt 136 bzw. 142 (je nachdem, ob das Ausführungsbeispiel gemäß Figur 2 oder Figur 3 betrachtet wird) schließt sich ein erster kegelförmiger Verengungsabschnitt 146 an, gefolgt von einem zylindrischen Verengungsabschnitt 148 und schließlich einem zweiten kegelförmigen Verengungsabschnitt 150.

Dabei ist der erste kegelförmige Verengungsabschnitt 146 derart ausgestaltet, dass in diesem Bereich die Wand des Ventilkörpers 124 mit der Einlaufachse 152 einen Winkel α zwischen 20° und 80°, vorzugsweise zwischen 25° und 65° einschließt. Analog schließt im zweiten kegelförmigen Verengungsabschnitt 150 die Wand des Ventilkörpers 124 mit der Einlaufachse 152 einen Winkel β ein, welcher im gleichen Winkelbereich liegt.

Die Länge der einzelnen Verengungsabschnitte 146, 148, 150 kann in einem weiten Bereich gestaltet werden. In diesem Ausführungsbeispiel liegt die Länge des zylindrischen Verengungsabschnitts 148 ungefähr bei 15 % der Gesamtlänge der Verengung 134, und die Länge des ersten kegelförmigen Verengungsabschnitts 146 ungefähr bei 50 %. Auch andere Ausgestaltungen sind jedoch möglich, insbesondere Abweichungen von der genannten Verteilung um beispielsweise bis zu einen Faktor 3. Weiterhin sind, im Gegensatz zu den hier dargestellten Ausführungen mit abruptem Übergang zwischen zylindrischen und kegelförmigen Verengungsabschnitten auch Abrunden möglich.

Für die Gesamtlänge der Verengung 134 in Richtung der Einlaufachse 152, also die Summe der Verengungsabschnitte 146, 148 und 150, haben sich Dimensionen als gut geeignet erwiesen, welche im Bereich größer 0% und kleiner als 100% (beispielsweise zwischen 30% und 80% oder zwischen 45% und 70%), und insbesondere zwischen 0% und 50% des maximalen Querschnitts des Diffusors D_{D} liegen.

Im Bereich des zylindrischen Verengungsabschnitts 148 weist die Verengung 134 in diesem Ausführungsbeispiel ihren engsten Durchmesser D_{V} auf. Dieser Verengungsdurchmesser Dv liegt vorzugsweise in einem Bereich zwischen 30 und 70 %, besonders bevorzugt zwischen 40 und 60 %, insbesondere zwischen 55 und 60 %, des größten Durchmessers des Diffusors 128. Dieser größte Durchmessers des Diffusors 128 wird in Figur 4 mit D_{D} bezeichnet und ist in diesem Ausführungsbeispiel der Durchmesser des zweiten zylindrischen Diffusorabschnitts 142 (Ausführungsbeispiel in Figur 3) bzw. der Durchmesser des zylindrischen Diffusorabschnitts 136 (Ausführungsbeispiel gemäß Figur 2). Diese Wahl der Verengung 134 hat bei typischen Druckdifferenzen in Einspritzeinrichtungen 135 zu Ausgestaltungen mit geringster Kavitationserosion geführt.

Auch für das in Figur 4 dargestellte Ausführungsbeispiel wurden Simulationsrechnungen zur Ermittlung der oben genannten, den Durchfluss und die Kavitationserosion charakterisierenden Parameter durchgerührt. Diese Simulationsrechnungen zeigten eine deutliche Verbesserung der Werte gegenüber der in Figur 1B dargestellten, dem Stand der Technik entsprechenden Ausführung.

So hat es sich gezeigt, dass im Dichtbereich, insbesondere in dem Bereich, in welchem bei geschlossenem Kugelsitzventil 110 das Schließelement 116 im Ventilsitz 120 aufliegt, Geschwindigkeiten von unter 200 m/s auftreten, wobei, was wiederum für die Kavitationserosion entscheidend ist, die Strömung praktisch durchgehend parallel zur Wand des Ventilkörpers 124 verläuft. Weiterhin war der Volumenanteil der gasförmigen Phase des fluiden Mediums (wiederum wurde mit Dieselkraftstoff gerechnet) gegenüber den Ergebnissen der Figur 1B deutlich reduziert und ergab Werte unterhalb von 0,2. Auch die oben beschriebene Massentransferrate von der Dampfphase in die flüssige Phase, also das Kondensationsverhalten, welches einen Hauptgrund der Kavitationserosion bildet, war deutlich reduziert und lag in dem kritischen Dichtbereich 132 unterhalb von 10000 kg/(s · m³).

Diese Ergebnisse zeigen, dass die erfindungsgemäße Verengung 134 die oben beschriebene Wirkung der Verringerung der Kavitationserosion erreicht und zu einer deutlichen Verbesserung der Langzeitstabilität der beanspruchten Kugelsitzventile 110 führt.

## Patentansprüche

1. Kugelsitzventil (110) zur Einstellung eines Durchflusses eines fluiden Mediums, aufweisend einen Ventilsitz (120) und eine abgerundetes Schließelement (116), insbesondere eine Ventilkugel, weiterhin aufweisend einen Einlauf (122) mit einer Vordrossel (126), und einen zwischen Vordrossel (126) und Ventilsitz (120) angeordneten Diffusor (128), **dadurch gekennzeichnet, dass** der Diffusor (128) auf seiner dem Ventilsitz (120) zugewandten Seite eine Verengung (134) aufweist.

2. Kugelsitzventil (110) gemäß dem vorhergehenden Anspruch, **dadurch gekennzeichnet, dass** die Verengung (134) eine Verringerung des Querschnitts des Einlaufs (122), insbesondere des Durchmessers des Einlaufs (122), relativ zum maximalen Querschnitt des Diffusors (128), insbesondere zum maximalen Durchmesser des Diffusors (128), auf 30 bis 70% aufweist, insbesondere auf 40 bis 60% und besonders bevorzugt auf 55 bis 60%.

3. Kugelsitzventil (110) gemäß einem der beiden vorhergehenden Ansprüche, **dadurch gekennzeichnet, dass** die Verengung (134) eine Länge entlang einer Einlaufachse aufweist, welche zwischen 0% und 100%, insbesondere zwischen 0% und 50% des maximalen Querschnitts des Diffusors (128) liegt.

4. Kugelsitzventil (110) gemäß einem der vorhergehenden Ansprüche, **dadurch gekennzeichnet, dass** die Verengung (134) einen dem Ventilsitz (120) abgewandten kegelförmigen Verengungsabschnitt (146) aufweist.

5. Kugelsitzventil (110) gemäß dem vorhergehenden Anspruch, **dadurch gekennzeichnet, dass** der kegelförmige Verengungsabschnitt (146) einen Bohrungswinkel zu einer Einlaufachse aufweist, welcher zwischen 20° und 80° und vorzugsweise zwischen 25° und 65° liegt.

6. Kugelsitzventil (110) gemäß einem der beiden vorhergehenden Ansprüche, **dadurch gekennzeichnet, dass** die Verengung (134) weiterhin einen zwischen dem kegelförmigen Verengungsabschnitt (146) und dem Ventilsitz (120) angeordneten zylindrischen Verengungsabschnitt (148) aufweist.

7. Kugelsitzventil (110) gemäß dem vorhergehenden Abschnitt, **dadurch gekennzeichnet, dass** die Verengung (134) weiterhin einen zwischen dem zylindrischen Verengungsabschnitt (148) und dem Ventilsitz (120) angeordneten zweiten kegelförmigen Verengungsabschnitt (150) aufweist.

8. Kugelsitzventil (110) gemäß einem der vorhergehenden Ansprüche, **dadurch gekennzeichnet, dass** der Diffusor (128) vor der Verengung (134) einen zylindrischen Diffusorabschnitt (136; 138, 142) aufweist.

9. Kugelsitzventil (110) gemäß dem vorhergehenden Anspruch, **dadurch gekennzeichnet, dass** der Diffusor (128) zusätzlich vor dem zylindrischen Diffusorabschnitt (136; 138, 142) einen kegelförmigen Diffusorabschnitt (140) aufweist.

10. Kugelsitzventil (110) gemäß dem vorhegehenden Anspruch, **dadurch gekennzeichnet, dass** das Kugelsitzventil (110) einen Ventilkörper (124) mit einer Trennebene (144) am Übergang zwischen dem zylindrischen Diffusorabschnitt (142) und dem kegelförmigen Diffusorabschnitt (140) aufweist.

11. Einspritzeinrichtung (135) zum Einspritzen von Kraftstoff aus einem Hochdruckspeicher in einen Brennraum einer Brennkraftmaschine, umfassend mindestens ein Einspritzventilglied zum Öffnen und Verschließen mindestens einer Einspritzöffnung, weiterhin umfassend mindestens einen mit dem Einspritzventilglied hydraulisch verbundenen Steuerraum (112), **dadurch gekennzeichnet, dass** der Steuerraum (112) mit einem Entlastungsraum (114) verbunden ist über mindestens ein Kugelsitzventil (110) gemäß einem der vorhergehenden Ansprüche.

12. Einspritzeinrichtung (135) gemäß dem vorhergehenden Anspruch, **gekennzeichnet durch** mindestens einen elektromechanischen Aktor (118) zum Betätigen des Schließelementes (116), wobei der elektromechanische Aktor (118) insbesondere einen elektromagnetischen Aktor und/oder einen Piezoaktor umfasst.

## Claims

1. Ball seat valve (110) for adjusting a throughflow of a fluid medium, having a valve seat (120) and having a rounded closing element (116), in particular a valve ball, and also having an inflow (122) with a prethrottle (126), and a diffuser (128) arranged between the prethrottle (126) and valve seat (120), **characterized in that** the diffuser (128) has, on its side facing towards the valve seat (120), a constriction (134).

2. Ball seat valve (110) according to the preceding claim, **characterized in that** the constriction (134) has a reduction in the cross section of the inflow (122), in particular of the diameter of the inflow (122), to 30 to 70%, in particular to 40 to 60% and particularly preferably to 55 to 60% in relation to the maximum cross section of the diffuser (128), in particular in relation to the maximum diameter of the diffuser (128).

3. Ball seat valve (110) according to either of the two preceding claims, **characterized in that** the constriction (134) has a length along an inflow axis of between 0% and 100%, in particular between 0% and 50% of the maximum cross section of the diffuser (128).

4. Ball seat valve (110) according to one of the preceding claims, **characterized in that** the constriction (134) has a conical constriction portion (146) which faces away from the valve seat (120).

5. Ball seat valve (110) according to the preceding claim, **characterized in that** the conical constriction portion (146) has a bore angle relative to an inflow axis of between 20° and 80° and preferably between 25° and 65°.

6. Ball seat valve (110) according to either of the two preceding claims, **characterized in that** the constriction (134) also has a cylindrical constriction portion (148) arranged between the conical constriction portion (146) and the valve seat (120).

7. Ball seat valve (110) according to the preceding claim, **characterized in that** the constriction (134) also has a second conical constriction portion (150) arranged between the cylindrical constriction portion (148) and the valve seat (120).

8. Ball seat valve (110) according to one of the preceding claims, **characterized in that** the diffuser (128) has a cylindrical diffuser portion (136; 138, 142) upstream of the constriction (134).

9. Ball seat valve (110) according to the preceding claim, **characterized in that** the diffuser (128) additionally has a conical diffuser portion (140) upstream of the cylindrical diffuser portion (136; 138, 142).

10. Ball seat valve (110) according to the preceding claim, **characterized in that** the ball seat valve (110) has a valve body (124) with a parting plane (144) at the transition between the cylindrical diffuser portion (142) and the conical diffuser portion (140).

11. Injection device (135) for injecting fuel from a high-pressure accumulator into a combustion chamber of an internal combustion engine, comprising at least one injection valve member for opening and closing at least one injection opening, and also comprising at least one control chamber (112) which is hydraulically connected to the injection valve member, **characterized in that** the control chamber (112) is connected to a relief chamber (114) by means of at least one ball seat valve (110) according to one of the preceding claims.

12. Injection device (135) according to the preceding claim, **characterized by** at least one electromechanical actuator (118) for actuating the closing element (116), with the electromechanical actuator (118) comprising in particular an electromagnetic actuator and/or a piezo actuator.

## Revendications

1. Soupape à siège sphérique (110) pour l'ajustement du débit d'un milieu fluide, présentant un siège de soupape (120) et un élément de fermeture arrondi (116), en particulier une bille de soupape, présentant en outre une entrée (122) avec un étranglement primaire (126) et un diffuseur (128) disposé entre l'étranglement primaire (126) et le siège de soupape (120), **caractérisée en ce que** le diffuseur (128) présente un rétrécissement (134) sur son côté tourné vers le siège de soupape (120).

2. Soupape à siège sphérique (110) selon la revendication précédente, **caractérisée en ce que** le rétrécissement (134) présente une réduction de la section transversale de l'entrée (122), notamment du diamètre de l'entrée (122), par rapport à la section transversale maximale du diffuseur (128), notamment par rapport au diamètre maximal du diffuseur (128), jusqu'à 30 à 70%, notamment jusqu'à 40 à 60%, et particulièrement préférablement jusqu'à 55 à 60%.

3. Soupape à siège sphérique (110) selon l'une quelconque des deux revendications précédentes, **caractérisée en ce que** le rétrécissement (134) présente une longueur le long d'un axe d'entrée qui est comprise entre 0% et 100%, notamment entre 0% et 50% de la section transversale maximale du diffuseur (128).

4. Soupape à siège sphérique (110) selon l'une quelconque des revendications précédentes, **caractérisée en ce que** le rétrécissement (134) présente une portion de rétrécissement (146) de forme conique opposée au siège de soupape (120).

5. Soupape à siège sphérique (110) selon la revendication précédente, **caractérisée en ce que** la portion de rétrécissement (146) de forme conique présente un angle de perçage par rapport à un axe d'entrée qui est compris entre 20° et 80°, et de préférence entre 25° et 65°.

6. Soupape à siège sphérique (110) selon l'une quelconque des deux revendications précédentes, **caractérisée en ce que** le rétrécissement (134) présente en outre une portion de rétrécissement (148) de forme cylindrique disposée entre la portion de rétrécissement (146) de forme conique et le siège de soupape (120).

7. Soupape à siège sphérique (110) selon la revendication précédente, **caractérisée en ce que** le rétrécissement (134) présente en outre une deuxième portion de rétrécissement (150) de forme conique disposée entre la portion de rétrécissement (148) de forme cylindrique et le siège de soupape (120).

8. Soupape à siège sphérique (110) selon l'une quelconque des revendications précédentes, **caractérisée en ce que** le diffuseur (128) présente avant le rétrécissement (134) une portion de diffuseur de forme cylindrique (136 ; 138 ; 142).

9. Soupape à siège sphérique (110) selon la revendication précédente, **caractérisée en ce que** le diffuseur (128) présente en outre avant la portion de diffuseur de forme cylindrique (136 ; 138, 142) une portion de diffuseur (140) de forme conique.

10. Soupape à siège sphérique (110) selon la revendication précédente, **caractérisée en ce que** la soupape à siège sphérique (110) présente un corps de soupape (124) avec un plan de séparation (144) au niveau de la transition entre la portion de diffuseur (142) de forme cylindrique et la portion de diffuseur (140) de forme conique.

11. Dispositif d'injection (135) pour l'injection de carburant depuis un accumulateur haute pression dans une chambre de combustion d'un moteur à combustion interne, comprenant au moins un organe de soupape d'injection pour ouvrir et fermer au moins une ouverture d'injection, comprenant en outre au moins un espace de commande (112) connecté hydrauliquement à l'organe de soupape d'injection, **caractérisé en ce que** l'espace de commande (112) est connecté à un espace de décharge (114) par le biais d'au moins une soupape à siège sphérique (110) selon l'une quelconque des revendications précédentes.

12. Dispositif d'injection (135) selon la revendication précédente, **caractérisé par** au moins un actionneur électromécanique (118) pour l'actionnement de l'élément de fermeture (116), l'actionneur électromécanique (118) comprenant notamment un actionneur électromagnétique et/ou un actionneur piézoélectrique.
